# EUROPEAN PATENT SPECIFICATION

(11) **EP 3 430 789 B1**
(45) Date of publication and mention of the grant of the patent: **26.08.2020**
(21) Application number: 16893837.1
(22) Date of filing: 14.03.2016
(51) Int. Cl.: H04L 29/08, G06F 16/957

(54) **SYSTEM AND METHOD FOR DELEGATING CONTENT PROCESSING**
SYSTEM UND VERFAHREN ZUM DELEGIEREN DER INHALTSVERARBEITUNG
SYSTÈME ET PROCÉDÉ DE DÉLÉGATION DE TRAITEMENT DE CONTENU

(43) Date of publication of application: 23.01.2019
(73) Proprietor: eBay Inc., San Jose, CA 95125 (US)
(72) Inventor: HU, Yue, Shanghai 201824 (CN); YANG, Yuquan, Shanghai 200011 (CN)
(74) Representative: Schwegman Lundberg Woessner Limited
(86) International application number: PCT/CN2016/076238
(87) International publication number: WO 2017/156672

(56) References cited:
- EP-A1- 2 498 529
- WO-A1-2008/012333
- CN-A- 101 466 022
- CN-A- 103 516 785
- CN-A- 103 914 335
- CN-A- 104 202 360
- US-A1- 2004 239 681
- US-A1- 2013 036 191
- US-A1- 2013 174 174

## Description

### TECHNICAL FIELD

Embodiments of the present disclosure relate generally to data processing and, more particularly, but not by way of limitation, to systems and methods of delegating content processing.

### BACKGROUND

The performance of a mobile browser of a mobile device in attempting to process online content is often unsatisfactory due to limited and unstable network capacity or availability, as well as the limitations of hardware resources of the mobile device.

US2004/239681 discloses a method of display of visual content on a client device using server-side rasterization of visual content. Visual content is rendered on a server system, transformed into bitmaps compatible with the display attributes of a client device, and transmitted for display on the client device.

WO2008/012333 discloses a Fragment Aggregator that utilizes an application independent surrogate to dispatch fragments and receive responses between isolated web applications. Clients send web application requests to the surrogate, which forwards the request to an isolated web application. When a web application requires other isolated web applications to execute the request, the web application responds to the request with a deferred response. The deferred response includes request fragments for the other isolated web applications. The Fragment Aggregator dispatches the fragments to the other isolated web applications. After receiving responses from the isolated web applications, the Fragment Aggregator combines the response and sends them to the client.

US2013/036191 discloses a system and method for presentation of content, or a title or link to content or presentation to a user on webpages of a website. A recommended content platform optimizes the links displayed on web pages based on a portfolio of content sources which determine which links are displayed in a given page view. The algorithms may utilize data relating to user interaction with webpages and may produce different sets of links depending on the content of a webpage and a position on a webpage where the links are to be displayed.

### SUMMARY

The present invention defines a method according to claim 1, a machine-readable storage medium according to claim 9 and a mobile device according to claim 10. Further embodiments are set forth in the dependent claims 2-8.

### BRIEF DESCRIPTION OF THE DRAWINGS

Some embodiments of the present disclosure are illustrated by way of example and not limitation in the figures of the accompanying drawings, in which like reference numbers indicate similar elements.
FIG. 1 is a block diagram illustrating a networked system, in accordance with some example embodiments.
FIG. 2 is a block diagram illustrating various components of a network-based publication system, in accordance with some example embodiments.
FIG. 3 is a block diagram illustrating an environment in which a processing delegation system is employed, in accordance with some example embodiments.
FIG. 4 illustrates a display of an online page, in accordance with some example embodiments.
FIG. 5 is a block diagram illustrating components of a processing delegation system, in accordance with some example embodiments.
FIG. 6 is a flowchart illustrating a method of delegating content processing, in accordance with some example embodiments.
FIG. 7 illustrates a table of corresponding levels of activity or resource availability of different candidate computing devices, in accordance with some example embodiments.
FIG. 8 illustrates a table of corresponding relationship information for different candidate computing devices with respect to a mobile device, in accordance with some example embodiments.
FIG. 9 illustrates a table of corresponding relationship information for different users with respect to a user of a mobile device, in accordance with some example embodiments.
FIG. 10 is a flowchart illustrating a method of handling a request for delegation of content processing, in accordance with some example embodiments.
FIG. 11 illustrates a prompt to authorize or deny a delegation request being displayed on a delegate computing device, in accordance with some example embodiments.
FIG. 12 is a block diagram illustrating a mobile device, in accordance with some example embodiments.
FIG. 13 is a diagrammatic representation of a machine in the form of a computer system within which a set of instructions may be executed for causing the machine to perform any one or more of the methodologies discussed herein, according to an example embodiment.

### DETAILED DESCRIPTION

In the following description, for purposes of explanation, numerous specific details are set forth in order to provide an understanding of various embodiments of the present subject matter. It will be evident, however, to those skilled in the art that example embodiments of the present subject matter can be practiced without these specific details. In general, well-known instruction instances, protocols, structures, and techniques have not been shown in detail.

The present disclosure provides technical solutions for mobile browser optimization. These technical solutions include techniques for handling browser rendering tasks for a mobile device, splitting up a workload and delegating portions of the workload to different rendering components of different mobile devices, and then merging the results from the different mobile devices for presentation on the original mobile device. As a result, faster and more efficient processing of online content can be achieved, mitigating problems associated with a limited hardware (e.g., central processing unit, memory) and network availability or capacity (e.g., bandwidth).

Systems and methods of delegating content processing are disclosed herein. In some example embodiments, a first mobile device generates, or otherwise determines, a plurality of content requests for an online page, with each one of the content requests corresponding to a different content item of the online page. In some example embodiments, the first mobile device determines a plurality of delegate computing devices to which to delegate the content requests. In some example embodiments, for each one of the plurality of content requests, the first mobile device triggers a corresponding one of the plurality of delegate mobile devices to retrieve the corresponding content item of the corresponding one of the content requests from a server hosting the online page, render the corresponding content item, and transmit the rendered content item to the first mobile device. In some example embodiments, for each one of the delegate computing devices, the first mobile device transmits a corresponding one of the content requests to the one of the delegate computing devices, with each corresponding one of the content requests being configured to trigger the corresponding delegate computing device to retrieve the corresponding content item of the corresponding one of the content requests from a server hosting the online page, render the corresponding content item, and transmit the rendered content item to the first mobile device. In some example embodiments, for each one of the delegate computing devices, the first mobile device receives the corresponding rendered content item from the corresponding delegate computing device, and displays the online page on the first mobile device, with the display of the online page comprising the corresponding rendered content items from the delegate computing devices.

In some example embodiments, the determining of the plurality of delegate computing devices comprises detecting candidate computing devices using wireless communication. In some example embodiments, the determining of the plurality of delegate computing devices further comprises, for each one of the candidate computing devices, assigning the candidate computing device as one of the delegate computing devices for the corresponding content request based on a corresponding current level of activity of the corresponding candidate computing device or on a corresponding availability of resources of the corresponding candidate computing device. In some example embodiments, the determining of the plurality of delegate computing devices further comprises, for each one of the candidate computing devices, assigning the candidate computing device as one of the delegate computing devices for the corresponding content request based on a determined relationship between the first mobile device and the candidate computing device. In some example embodiments, the determining of the plurality of delegate computing devices further comprises, for each one of the candidate computing devices, assigning the candidate computing device as one of the delegate computing devices for the corresponding content request based on a determined relationship between a user of the first mobile device and a user of the candidate computing device.

In some example embodiments, the displaying of the online page comprises determining a corresponding section of the online page for each one of the received rendered content items, and inserting each one of the received rendered content items into the corresponding section of the online page. In some example embodiments, each one of the content items comprises one of image content, multimedia content, applet content, and frames content.

In some example embodiments, the generating, or otherwise determining, of the plurality of content requests comprises transmitting a Hypertext Transfer Protocol (HTTP) request for the online page to the server hosting the online page, receiving an HTTP response from the server subsequent to the transmitting of the HTTP request, the HTTP response corresponding to the HTTP request, and parsing the HTTP request, with the generating of the plurality of content requests being based on the parsing of the HTTP request.

In some example embodiments, the first mobile device comprises a smartphone, a tablet computer, a wearable device, or a laptop computer. In some example embodiments, the plurality of delegate computing devices comprises a plurality of mobile devices.

The methods or embodiments disclosed herein can be implemented as a computer system having one or more modules (e.g., hardware modules or software modules). Such modules can be executed by one or more processors of the computer system. The methods or embodiments disclosed herein can be embodied as instructions stored on a machine-readable medium that, when executed by one or more processors, cause the one or more processors to perform the instructions.

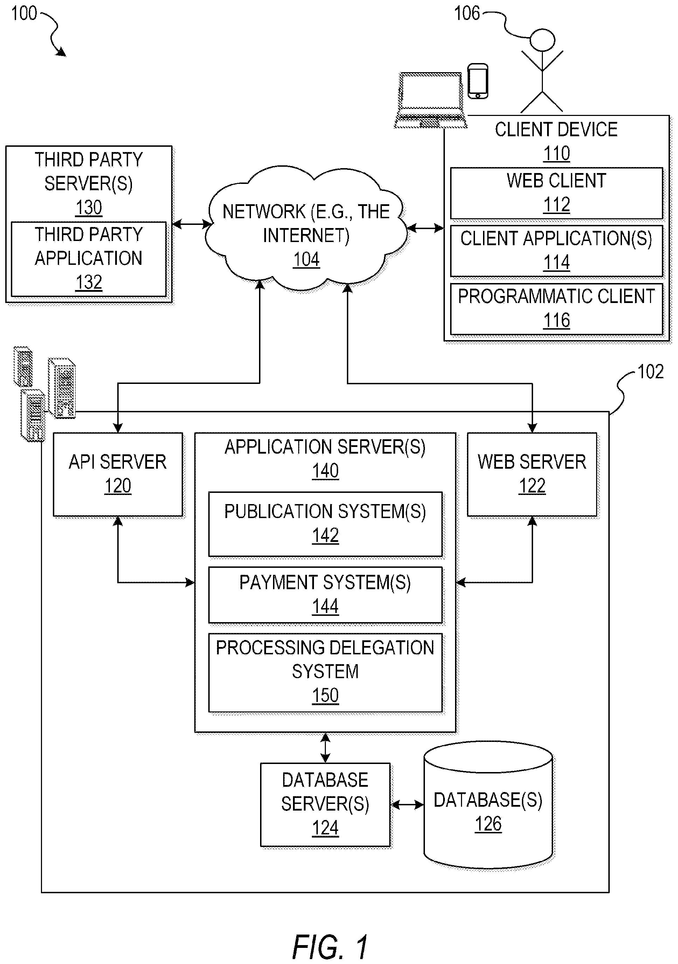

With reference to FIG. 1, an example embodiment of a high-level client-server-based network architecture 100 is shown. A networked system 102, in the example forms of a network-based marketplace or payment system, provides server-side functionality via a network 104 (e.g., the Internet or wide area network (WAN)) to one or more client devices 110. FIG. 1 illustrates, for example, a web client 112 (e.g., a browser, such as the Internet Explorer® browser developed by Microsoft® Corporation of Redmond, Washington State), client application(s) 114, and a programmatic client 116 executing on client device 110.

The client device 110 may comprise, but is not limited to, a mobile phone, desktop computer, laptop, portable digital assistants (PDAs), smart phones, tablets, ultra books, netbooks, laptops, multi-processor systems, microprocessor-based or programmable consumer electronics, game consoles, set-top boxes, or any other communication device that a user may utilize to access the networked system 102. In some embodiments, the client device 110 may comprise a display module (not shown) to display information (e.g., in the form of user interfaces). In further embodiments, the client device 110 may comprise one or more of a touch screens, accelerometers, gyroscopes, cameras, microphones, global positioning system (GPS) devices, and so forth. The client device 110 may be a device of a user that is used to perform a transaction involving digital items within the networked system 102. In one embodiment, the networked system 102 is a network-based marketplace that responds to requests for product listings, publishes publications comprising item listings of products available on the network-based marketplace, and manages payments for these marketplace transactions. One or more users 106 may be a person, a machine, or other means of interacting with client device 110. In embodiments, the user 106 is not part of the network architecture 100, but may interact with the network architecture 100 via client device 110 or another means. For example, one or more portions of network 104 may be an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, a wireless network, a WiFi network, a WiMax network, another type of network, or a combination of two or more such networks.

Each client device 110 may include one or more applications (also referred to as "apps") such as, but not limited to, a web browser, messaging application, electronic mail (email) application, an e-commerce site application (also referred to as a marketplace application), and the like. In some embodiments, if the e-commerce site application is included in a given client device 110, then this application is configured to locally provide the user interface and at least some of the functionalities with the application configured to communicate with the networked system 102, on an as needed basis, for data or processing capabilities not locally available (e.g., access to a database of items available for sale, to authenticate a user, to verify a method of payment, etc.). Conversely if the e-commerce site application is not included in the client device 110, the client device 110 may use its web browser to access the e-commerce site (or a variant thereof) hosted on the networked system 102.

One or more users 106 may be a person, a machine, or other means of interacting with the client device 110. In example embodiments, the user 106 is not part of the network architecture 100, but may interact with the network architecture 100 via the client device 110 or other means. For instance, the user 106 provides input (e.g., touch screen input or alphanumeric input) to the client device 110 and the input is communicated to the networked system 102 via the network 104. In this instance, the networked system 102, in response to receiving the input from the user 106, communicates information to the client device 110 via the network 104 to be presented to the user 106. In this way, the user 106 can interact with the networked system 102 using the client device 110.

An application program interface (API) server 120 and a web server 122 are coupled to, and provide programmatic and web interfaces respectively to, one or more application servers 140. The application server(s) 140 may host one or more publication systems 142, payment systems 144, and processing delegation system 150, each of which may comprise one or more modules or applications and each of which may be embodied as hardware, software, firmware, or any combination thereof. The application server(s) 140 are, in turn, shown to be coupled to one or more database servers 124 that facilitate access to one or more information storage repositories or database(s) 126. In an example embodiment, the database(s) 126 are storage devices that store information to be posted (e.g., publications or listings) to the publication system(s) 142. The database(s) 126 may also store digital item information in accordance with example embodiments.

Additionally, a third party application 132, executing on third party server(s) 130, is shown as having programmatic access to the networked system 102 via the programmatic interface provided by the API server 120. For example, the third party application 132, utilizing information retrieved from the networked system 102, supports one or more features or functions on a website hosted by the third party. The third party website, for example, provides one or more promotional, marketplace, or payment functions that are supported by the relevant applications of the networked system 102.

The publication system(s) 142 may provide a number of publication functions and services to users 106 that access the networked system 102. The payment system(s) 144 may likewise provide a number of functions to perform or facilitate payments and transactions. While the publication system(s) 142 and payment system(s) 144 are shown in FIG. 1 to both form part of the networked system 102, it will be appreciated that, in alternative embodiments, each system 142 and 144 may form part of a payment service that is separate and distinct from the networked system 102. In some embodiments, the payment system(s) 144 may form part of the publication system(s) 142.

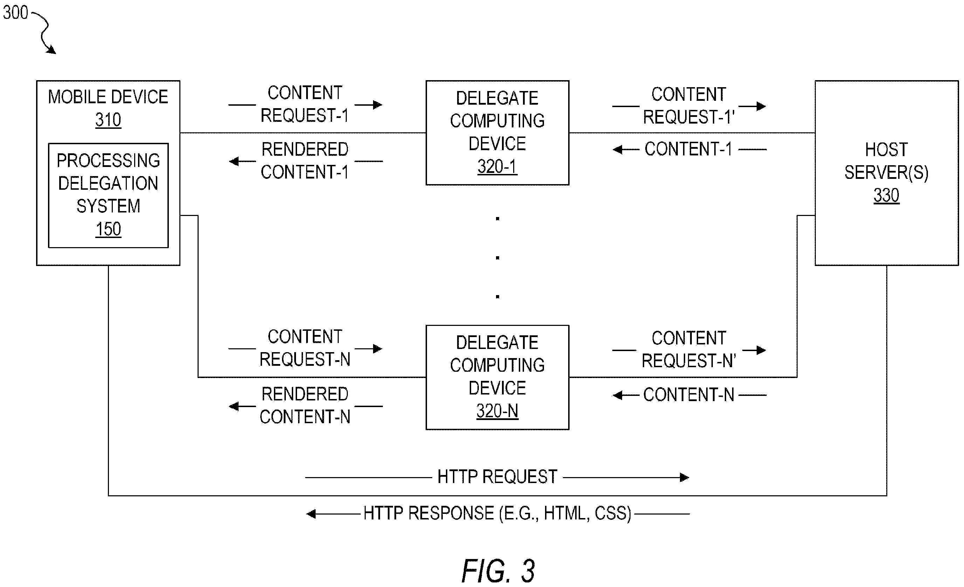

The processing delegation system 150 provides functionality operable to perform various processing delegation operations, as will be discussed in further detail below, such as with respect to FIGS. 3-11. The processing delegation system 150 may access the data from the database(s) 126, the third party servers 130, the publication system(s) 142, and other sources. In some example embodiments, the processing delegation system 150 may analyze the data to perform processing delegation operations. In some example embodiments, the processing delegation system 150 communicates with the publication system(s) 142 (e.g., accessing item listings) and payment system(s) 144. In an alternative embodiment, the processing delegation system 150 is be a part of the publication system(s) 142.

Further, while the client-server-based network architecture 100 shown in FIG. 1 employs a client-server architecture, the present subject matter is of course not limited to such an architecture, and could equally well find application in a distributed, or peer-to-peer, architecture system, for example. The various publication system(s) 142, payment system(s) 144, and processing delegation system 150 could also be implemented as standalone software programs, which do not necessarily have networking capabilities.

Furthermore, although the processing delegation system 150 is shown in FIG. 1 as being hosted by application server(s) 140, in some example embodiments, the processing delegation system 150 resides on, or is otherwise incorporated into, the client device 110, such as in a mobile device, as will be discussed in further detail below with respect to FIG. 3.

The web client 112 may access the various publication and payment systems 142 and 144 via the web interface supported by the web server 122. Similarly, the programmatic client 116 accesses the various services and functions provided by the publication and payment systems 142 and 144 via the programmatic interface provided by the API server 120. The programmatic client 116 may, for example, be a seller application (e.g., the Turbo Lister application developed by eBay® Inc., of San Jose, California) to enable sellers to author and manage listings on the networked system 102 in an off-line manner, and to perform batch-mode communications between the programmatic client 116 and the networked system 102.

Additionally, a third party application 132, executing on a third party server(s) 130, is shown as having programmatic access to the networked system 102 via the programmatic interface provided by the API server 120. For example, the third party application 132, utilizing information retrieved from the networked system 102, may support one or more features or functions on a website hosted by the third party. The third party website may, for example, provide one or more promotional, marketplace, or payment functions that are supported by the relevant applications of the networked system 102.

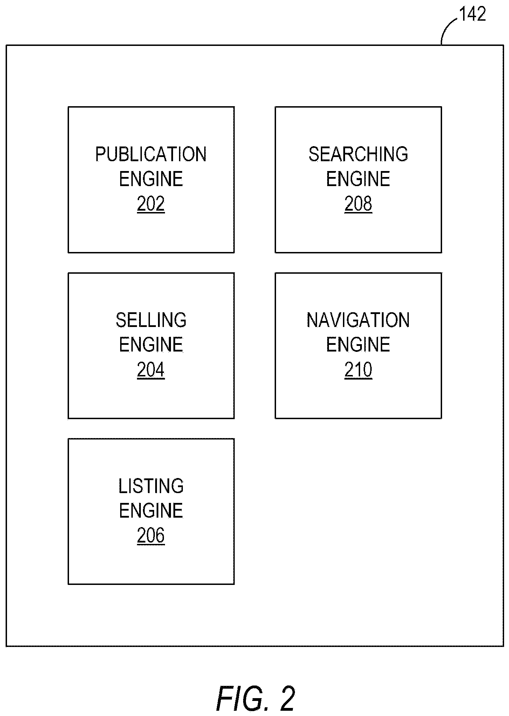

FIG. 2 is a block diagram illustrating various components of the network-based publication system(s) 142, in accordance with some example embodiments. The publication system(s) 142 can be hosted on dedicated or shared server machines that are communicatively coupled to enable communications between server machines. The components themselves are communicatively coupled (e.g., via appropriate interfaces) to each other and to various data sources, so as to allow information to be passed between the components or so as to allow the components to share and access common data. Furthermore, the components can access one or more databases 126 via the database server(s) 124.

The publication system(s) 142 can provide a number of publishing, listing, and/or price-setting mechanisms whereby a seller (also referred to as a first user) can list (or publish information concerning) goods or services for sale or barter, a buyer (also referred to as a second user) can express interest in or indicate a desire to purchase or barter such goods or services, and a transaction (such as a trade) can be completed pertaining to the goods or services. To this end, the publication system(s) 142 can comprise at least one publication engine 202 and one or more selling engines 204. The publication engine 202 can publish information, such as item listings or product description pages, on the publication system(s) 142. In some embodiments, the selling engine 204 can comprise one or more fixed-price engines that support fixed-price listing and price setting mechanisms and one or more auction engines that support auction-format listing and price setting mechanisms (e.g., English, Dutch, Chinese, Double, Reverse auctions, etc.). The various auction engines can also provide a number of features in support of these auction-format listings, such as a reserve price feature whereby a seller can specify a reserve price in connection with a listing and a proxy-bidding feature whereby a bidder can invoke automated proxy bidding. The selling engine 204 can further comprise one or more deal engines that support merchant-generated offers for products and services.

A listing engine 206 allows sellers to conveniently author listings of items or authors to author publications. In one embodiment, the listings pertain to goods or services that a user (e.g., a seller) wishes to transact via the publication system(s) 142. In some embodiments, the listings can be an offer, deal, coupon, or discount for the good or service. Each good or service is associated with a particular category. The listing engine 206 can receive listing data such as title, description, and aspect name/value pairs. Furthermore, each listing for a good or service can be assigned an item identifier. In other embodiments, a user can create a listing that is an advertisement or other form of information publication. The listing information can then be stored to one or more storage devices coupled to the publication system(s) 142 (e.g., database(s) 126). Listings also can comprise product description pages that display a product and information (e.g., product title, specifications, and reviews) associated with the product. In some embodiments, the product description page can include an aggregation of item listings that correspond to the product described on the product description page.

The listing engine 206 can also allow buyers to conveniently author listings or requests for items desired to be purchased. In some embodiments, the listings can pertain to goods or services that a user (e.g., a buyer) wishes to transact via the publication system(s) 142. Each good or service is associated with a particular category. The listing engine 206 can receive as much or as little listing data, such as title, description, and aspect name/value pairs, that the buyer is aware of about the requested item. In some embodiments, the listing engine 206 can parse the buyer's submitted item information and can complete incomplete portions of the listing. For example, if the buyer provides a brief description of a requested item, the listing engine 206 can parse the description, extract key terms, and use those terms to make a determination of the identity of the item. Using the determined item identity, the listing engine 206 can retrieve additional item details for inclusion in the buyer item request. In some embodiments, the listing engine 206 can assign an item identifier to each listing for a good or service.

In some embodiments, the listing engine 206 allows sellers to generate offers for discounts on products or services. The listing engine 206 can receive listing data, such as the product or service being offered, a price and/or discount for the product or service, a time period for which the offer is valid, and so forth. In some embodiments, the listing engine 206 permits sellers to generate offers from the sellers' mobile devices. The generated offers can be uploaded to the publication system(s) 142 for storage and tracking.

Searching the publication system(s) 142 is facilitated by a searching engine 208. For example, the searching engine 208 enables keyword queries of listings published via the publication system(s) 142. In example embodiments, the searching engine 208 receives the keyword queries from a device of a user and conducts a review of the storage device storing the listing information. The review will enable compilation of a result set of listings that can be sorted and returned to the client device 110 of the user. The searching engine 208 can record the query (e.g., keywords) and any subsequent user actions and behaviors (e.g., navigations).

The searching engine 208 also can perform a search based on the location of the user. A user can access the searching engine 208 via a mobile device and generate a search query. Using the search query and the user's location, the searching engine 208 can return relevant search results for products, services, offers, auctions, and so forth to the user. The searching engine 208 can identify relevant search results both in a list form and graphically on a map. Selection of a graphical indicator on the map can provide additional details regarding the selected search result. In some embodiments, the user can specify as part of the search query a radius or distance from the user's current location to limit search results.

The searching engine 208 also can perform a search based on an image. The image can be taken from a camera or imaging component of a client device or can be accessed from storage.

In a further example, a navigation engine 210 allows users to navigate through various categories, catalogs, or inventory data structures according to which listings can be classified within the publication system(s) 142. For example, the navigation engine 210 allows a user to successively navigate down a category tree comprising a hierarchy of categories (e.g., the category tree structure) until a particular set of listings is reached. Various other navigation applications within the navigation engine 210 can be provided to supplement the searching and browsing applications. The navigation engine 210 can record the various user actions (e.g., clicks) performed by the user in order to navigate down the category tree.

FIG. 3 is a block diagram illustrating an environment 300 in which a processing delegation system 150 is employed, in accordance with some example embodiments. The environment 300 comprises a mobile device 310, one or more delegate computing devices 320 (e.g., delegate computing devices 320-1, 320-2, ..., 320-N), and one or more host servers 330. The mobile device 310, delegate computing device(s) 320, and host server(s) 330 may communicate with each other via one or more networks (e.g., cellular network, the Internet, Wide Area Network (WAN), Personal Area Network (PAN)). In some example embodiments, the mobile device 310 and the delegate computing device(s) 320 communicate with each other via wireless communication technology (e.g., Bluetooth, WiFi, Long Term Evolution (LTE), etc.). However, it is contemplated that other modes or paths of communication between mobile device 310, delegate computing device(s) 320, and host server(s) 330 are also within the scope of the present disclosure.

In some example embodiments, the mobile device 310 comprises a smartphone, a tablet computer, a wearable device, or a laptop computer. However, other types of mobile devices are also within the scope of the present disclosure. Additionally, in some example embodiments, the delegate computing device(s) 320 comprises any type of computing device, including, but not limited to, mobile devices, desktop computers, and a vehicle computing device. However, other types of computing devices are also within the scope of the present disclosure.

In some example embodiments, a user of the mobile device 310 attempts to access and view content of an online page hosted by host server(s) 330. The user can provide user input (e.g., enter text, click selectable user interface elements) to the mobile device 310 to trigger the mobile device 310 to load the content of the online page on the mobile device 310. For example, the user can attempt to load content of a website via a web browser installed on the mobile device 310. Additionally or alternatively, the user can attempt to load content of an online service via a mobile application installed on the mobile device 310.

In some example embodiments, in response to the user providing input to trigger the loading of content of the online page, the mobile device 310 transmits a Hypertext Transfer Protocol (HTTP) request for the online page to the corresponding host server(s) 330 of the online page. The host server(s) 330 responds to the HTTP request with an HTTP response, which can comprise code that indicates structure, content, and/or style attributes of the online page (e.g., Hypertext Markup Language (HTML), Cascading Style Sheets (CSS)). The mobile device 310 can receive the HTTP response from the host server(s) 330 and parse the HTTP request, determining what content items of the online page should be retrieved and rendered in order to load the online page on the mobile device 310. In this respect, the mobile device 310 determines the workload for loading the online page.

In some example embodiments, the processing delegation system 150 splits up the workload into multiple content requests, and delegates these content requests to different delegate computing devices 320, such that the delegate computing devices 320 retrieve, process, and render the corresponding content items of the content requests they have been delegated. In the example shown in FIG. 3, the processing delegation system 150 transmits a plurality of different content requests (content request-1, ..., content request-N) to different delegate computing devices 320 (delegate computing device 320-1, ..., delegate computing device 320-N). For example, the processing delegation system 150 can split a workload for an online page into a flash request for flash content of the online page, an applet request for applet content of the online page, and an image request for image content of the online page, and transmit these requests to corresponding delegate computing devices 320, such as transmitting the flash request to a first delegate computing device 320-1, transmitting the applet request to a second delegate computing device 320-2, and transmitting the image request to a third delegate computing device 320-3.

As previously discussed, the processing delegation system 150 can reside on, or be otherwise incorporated into, the mobile device 310. Alternatively, the processing delegation system 150 can reside on, or be otherwise incorporated into, a computing device other than the mobile device 310, such as a remote server. Accordingly, the processing delegation system 150 can either cause the mobile device 310 to perform the operations discussed herein with respect to processing delegation or cause another computing device to perform such operations on behalf of the mobile device 310, or a combination of both, with some operations being performed by the mobile device 310 and other operations being performed by another computing device.

Each delegate computing device 320 receives the corresponding content request from the processing delegation system 150. The content request is configured to trigger or otherwise cause the corresponding delegate computing device 320 to retrieve the corresponding content item of the corresponding content request from the host sever(s) 330, such as via a content request (e.g., content request-1') corresponding to the content request from the processing delegation system 150 (e.g., content request-1), render the corresponding content item (e.g., content-1) retrieved from the host server(s) 330, and transmit the corresponding rendered content item (e.g., rendered content-1) to the processing delegation system 150. The processing delegation system 150 can then determine a corresponding location or section of the online page for each of the received rendered content items, and insert each received rendered content item into its corresponding location or section of the online page, thereby merging the rendered content items received from the delegate computing devices 320 into the display of the online page on the mobile device 310.

In some example embodiments, rendering content items comprises processing one or more content layout tags (e.g., HTML, XML, image, file, etc.), turning the content layout tags into the appropriate commands for an operating system, causing the formation of the content to display correctly on an output endpoint, such as a display screen on the mobile device 310. For example, rendering can comprise interpreting HTML code (e.g., HTML code of the online page) into what will be displayed on the mobile device 310 (e.g., interpreting an HTML tag as a set of instructions to make the text inside of the element bold). In some example embodiments, rendering comprises parsing HTML elements and creating a document object model (DOM) tree, where each HTML tag is a branch of the tree. In some example embodiments, rendering also comprises parsing style attributes (e.g., CSS attributes) and forming a CSS Object Model, which can then be combined with the DOM tree to create a render tree (e.g., a tree of visual elements, such as height, width, and color ordered in the hierarchy in which they are to be displayed in the browser), and then recursively going through the HTML elements in the tree and figuring out where they should be placed on the display screen of the mobile device 310, mapping elements and attributes to coordinates on the display screen. This mapping can be used to generate the appropriate commands for an operating system to display the content on the mobile device 310.

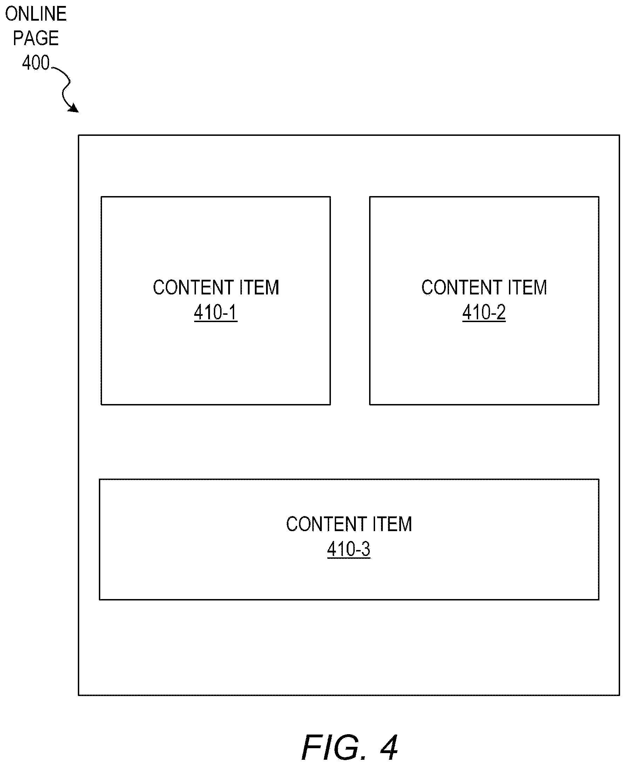

FIG. 4 illustrates a display of an online page 400, in accordance with some example embodiments. The online page 400 can be displayed on the mobile device 310 via a web browser or a mobile application corresponding to the online page 400. In the example shown in FIG. 4, the display of the online page 400 comprises three different content items, content item 410-1, content item 410-2, and content item 410-3, which were retrieved and rendered by three different corresponding delegate computing devices 320 (e.g., delegate computing device 320-1 for content item 410-1, delegate computing device 320-2 for content item 410-2, and delegate computing device 320-3 for content item 410-3). In some example embodiments, the different rendered content items comprise different types of content. For example, content item 410-1 can comprise flash content, content item 410-2 can comprise applet content, and content item 410-3 can comprise image content. However, it is contemplated that other types and configurations of the content items are also within the scope of the present disclosure.

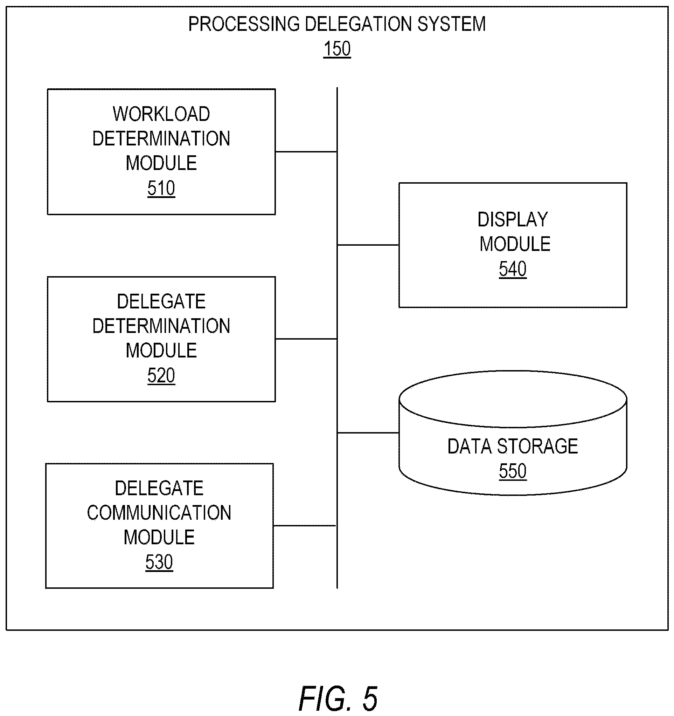

FIG. 5 is a block diagram illustrating components of the processing delegation system 150, in accordance with some example embodiments. In some example embodiments, the processing delegation system 150 comprises any combination of one or more of a workload determination module 510, a delegate determination module 520, a delegate communication module 530, and a display module 540. In some example embodiments, the processing delegation system 150 also comprises a data storage 550 (e.g., one or more databases).

The workload determination module 510, the delegate determination module 520, the delegate communication module 530, the display module 540, and the data storage 550 are communicatively coupled to each other. In some example embodiments, the workload determination module 510, the delegate determination module 520, the delegate communication module 530, the display module 540, and the data storage 550 reside on a single machine having a memory and at least one processor. In some example embodiments, one or more of the workload determination module 510, the delegate determination module 520, the delegate communication module 530, the display module 540, and the data storage 550 reside on different machines, such as some of these components residing on the application server(s) 140 of FIG. 1, while other of these components reside on the mobile device 310 of FIG. 3. Data storage 550, or a portion thereof, can be incorporated into database(s) 126 of FIG. 1.

In some example embodiments, the workload determination module 510 determines a plurality of content requests for an online page, with each one of the content requests corresponding to a different content item of the online page. In some example embodiments, the workload determination module 510 is configured to transmit an HTTP request for the online page to the server hosting the online page, receive an HTTP response from the server subsequent to the transmitting of the HTTP request, and parse the HTTP request, as previously discussed above with respect to FIG. 3. The workload determination module 510 can determine the plurality of content requests based on the parsing of the HTTP request.

In some example embodiments, the delegate determination module 520 is configured to determine a plurality of delegate computing devices 320 to which to delegate the content requests. The delegate determination module 520 can determine the plurality of delegate computing devices 320 in a variety of ways. In some example embodiments, the delegate determination module 520 detects candidate computing devices using wireless communication. For example, the delegate determination module 520 can detect computing devices that are within a certain range of the mobile device 310, such as by using Bluetooth, WiFi, or LTE technology. In one example, a user of the mobile device 310 is seated in a coffee shop and attempting to load an online page on the mobile device 310. The delegate determination module 520 can determine what other computing devices are nearby, within sufficient range, and are accessible for communication with the mobile device 310. These detected computing devices can be determined to be candidate computing devices (candidates to be considered for delegation of the content processing).

In some example embodiments, delegate determination module 520 is further configured to evaluate one or more attributes or characteristics of the candidate computing devices, and then select or assign one or more of the candidate computing devices to be a delegate computing device 320. Such attributes and characteristics include, but are not limited to, a current level of activity of the candidate computing device (e.g., is the candidate computing device idle, how many applications are currently active or running on the candidate computing device, etc.), a current level of availability of resources of the candidate computing device (e.g., is the candidate computing device idle, how many resources are currently active or being used on the candidate computing device, etc.), a determined relationship level for the mobile device 310 and the candidate computing device (e.g., is the candidate computing device listed as a predetermined delegate for the mobile device 310, how much previous communication has there been between the mobile device 310 and the candidate computing device, etc.), a determined relationship level between a user of the mobile device 310 and a user of the candidate computing device (e.g., is an identified user of the candidate computing device listed as a delegate for the user of the mobile device 310, is an identified user of the candidate computing device listed as a contact for the user of the mobile device 310, does an identified user of the candidate computing device have a social media connection with the user of the mobile device 310, etc.), and other traits or attributes associated with the candidate computing device (e.g., brand, make, model, processor speed, memory, etc.).

In some example embodiments, the delegate determination module 520 determines a value (e.g., a score) for each one of the candidate computing devices. The value can be determined based on one or more of the attributes or characteristics of the corresponding candidate computing device, with values being associated with differences within a category of attribute/characteristic (e.g., a currently idle device being valued higher than a device currently running multiple applications). Different categories of attributes or characteristics can be weighted the same (e.g., availability and processing power of candidate computing device weighted the same as relationship between user of candidate computing device with user of mobile device) or can be weighted differently (e.g., availability and processing power of candidate computing device weighted more than the relationship between user of candidate computing device with user of mobile device).

In some example embodiments, the delegate determination module 520 ranks the candidate computing devices based on their corresponding values, and selects the top ranked candidate computing devices for use as delegate computing devices. In some example embodiments, the selection of the delegate computing devices can be based on the number of content requests. For example, if the workload determination module 510 divides the workload into three content requests, then the delegate determination module 520 can select the top three candidate computing devices to be the delegate computing devices based on that determination of three content requests.

However, it is also contemplated that the number of content requests can be determined based on a determination of the delegate computing devices. For example, the delegate determination module 520 can determine that there are only two candidate computing devices, or only two candidate computing devices that meet a predetermined minimum criteria (e.g., a minimum level of availability of resources, a minimum relationship level between the devices or users, a minimum level of processing power or memory of the candidate computing device). As a result, the workload determination module 510 can determine how to divide the workload (e.g., the number of content requests) based on the determination of the delegate computing devices.

In some example embodiments, the delegate determination module 520 is further configured to assign content requests to the delegate computing devices 320 based on the traits of characteristics of the delegate computing devices 320. For example, delegate computing devices 320 can be assigned more complex content requests based on their having more available resources or capabilities than other delegate computing devices. In another example, certain content requests that involve the retrieval and rendering of sensitive personal information of the user of the mobile device 310 can be assigned to delegate computing devices 320 of users that have a stronger relationship with the user of the mobile device 310 than delegate computing devices 320 of strangers to the user of the mobile device 310 (e.g., content requests involving sensitive information can be delegated to computing devices of users having a social media connection with the user of the mobile device 310).

In some example embodiments, the delegate determination module 520 is configured to cancel the delegation of the workload in response to a determination that none of the candidate computing devices satisfies a minimum level of criteria (e.g., minimum relationship level with the user of the mobile device 310) for a particular category of content request (e.g., a content request involving personal information of the user of the mobile device 310).

In some example embodiments, the delegate communication module 530 is configured to, for each one of the delegate computing devices 320, transmit a corresponding content request to the corresponding delegate computing device 320. Each corresponding content request can be configured to trigger the corresponding delegate computing device 320 to retrieve the corresponding content item of the corresponding content request from the host server(s) 330, render the corresponding content item, and transmit the rendered content item to the processing delegation system 150.

In some example embodiments, the display module 540 is configured to cause the display of the online page on the mobile device 310. The display of the online page comprises the corresponding rendered content items from the delegate computing devices 320. In some example embodiments, the display module 540 is further configured to determine a corresponding section of the online page for each one of the received rendered content items (e.g., a first section of the online page for a first rendered content item, a second section of the online page for a second rendered content item, a third section of the online page for a third rendered content item, and so on and so forth), and insert each one of the received rendered content items into the corresponding section of the online page.

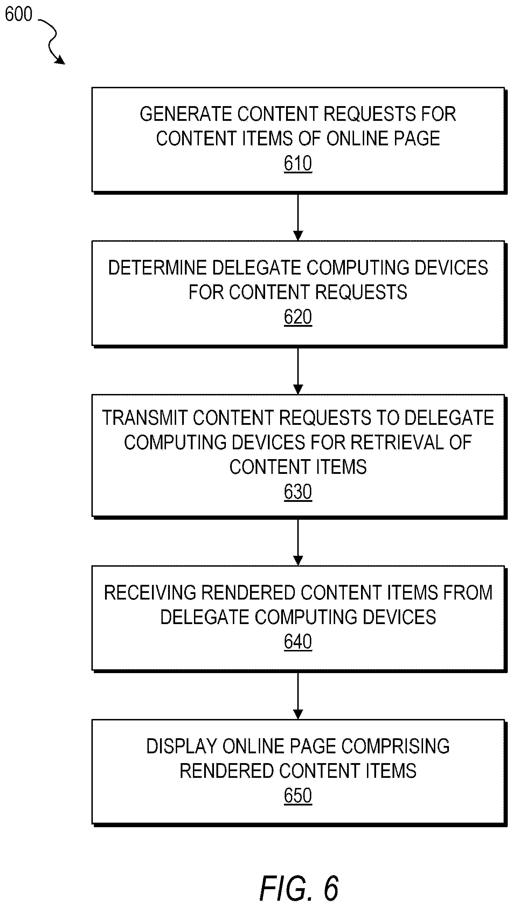

FIG. 6 is a flowchart illustrating a method 600 of delegating content processing, in accordance with some example embodiments. The operations of method 600 can be performed by a system or modules of a system. The operations of method 600 can be performed by processing logic that can comprise hardware (e.g., circuitry, dedicated logic, programmable logic, microcode, etc.), software (e.g., instructions run on a processing device), or a combination thereof. In one example embodiment, the method 600 is performed by processing delegation system 150 of FIGS. 1, 3, and 5, or any combination of one or more of its components or modules, as described above.

At operation 610, a plurality of content requests is generated, or otherwise determined, for loading an online page on a mobile device. Each one of the content requests corresponds to a different content item of the online page. At operation 620, a plurality of delegate computing devices to which to delegate the content requests is determined. At operation 630, for each one of the plurality of content requests, the first mobile device triggers a corresponding one of the plurality of delegate mobile devices to retrieve the corresponding content item of the corresponding one of the content requests from a server hosting the online page, render the corresponding content item, and transmit the rendered content item to the first mobile device. In some example embodiments, for each one of the delegate computing devices, a corresponding one of the content requests is transmitted to the corresponding delegate computing device. Each corresponding one of the content requests is configured to trigger the corresponding delegate computing device to retrieve the corresponding content item of the corresponding content request from a server hosting the online page, render the corresponding content item, and transmit the rendered content item to the mobile device. At operation 640, for each one of the delegate computing devices, the mobile device receives the corresponding rendered content item from the corresponding delegate computing device. At operation 650, the online page is displayed on the mobile device. The display of the online page comprises the corresponding rendered content items from the delegate computing devices.

It is contemplated that the operations of method 600 can incorporate any of the other features disclosed herein.

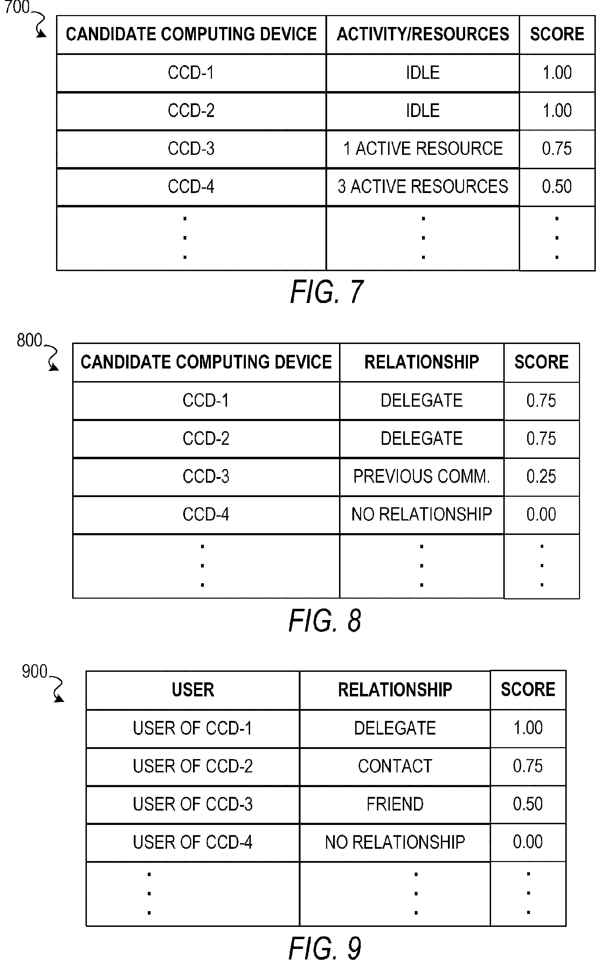

FIG. 7 illustrates a table 700 of corresponding levels of activity or resource availability of different candidate computing devices, in accordance with some example embodiments. This table 700, or the associations represented within it, can be generated and/or stored by the processing delegation system 150 for use in the previously-discussed evaluation of the different candidate computing devices for selection as delegate computing devices.

As seen in FIG. 7, levels of activity or resource availability can be generated for a plurality of candidate computing devices, such as CCD-1, CCD-2, CCD-3, CCD-4, and so on. For example, the delegate determination module 520 can determine that CCD-1 is currently idle (or has no significant application running), CCD-2 is also currently idle, CCD-3 has one application running or one resource actively being used, CCD-4 has three applications running or three resources actively being used, and so on. The delegate determination module 520 can determine the level of activity or resource availability of a candidate computing device by pinging the candidate computing device or requesting such information from the candidate computing device. In some example embodiments, the delegate determination module 520 is configured to give preference to candidate computing devices with higher levels of availability, such that the more available (e.g., the less number of applications running, the less number of resources being consumed) a candidate computing device is, the higher the probability that the delegate determination module 520 will select that candidate computing device as a delegate computing device. As shown in the example embodiment of FIG. 7, different scores or weights can be associated with the different levels of availability (e.g., a score of 1.00 for devices that are determined to be idle, a score of 0.75 for devices that are determined to have one active resource, a score of 0.50 for devices that are determined to have three active resources, etc.), and the candidate computing devices can then be ranked based on their corresponding scores or weights.

FIG. 8 illustrates a table 800 of corresponding relationship information for different candidate computing devices with respect to a mobile device, in accordance with some example embodiments. This table 800, or the associations represented within it, can be generated and/or stored by the processing delegation system 150 for use in the previously-discussed evaluation of the different candidate computing devices for selection as delegate computing devices.

As seen in FIG. 8, relationship levels can be generated for the plurality of candidate computing devices with respect to the mobile device 310. For example, the delegate determination module 520 can determine that CCD-1 and CCD-2 are listed as delegates for the mobile device 310, CCD-3 is not listed as a delegate, but has had a certain number of previous communication sessions (e.g., phone calls, texts, e-mails, etc.) with the mobile device 310, and CCD-4 has no relationship with the mobile device 310 (e.g., not listed as a delegate and no previous communications with the mobile device 310).

The delegate determination module 520 can determine the relationship level for a candidate computing device with respect to the mobile device 310 in a variety of ways. For example, the delegate determination module 520 can access a profile of the mobile device 310. The profile can be stored on the mobile device 310 or on a remote computing device (e.g., a remote server). The profile of the mobile device 310 can list, and thereby designate, certain devices as delegate computing devices 320. In some example embodiments, the delegate determination module 520 is configured to enable a user of the mobile device 310 to modify this list of pre-designated delegate computing devices 320. The delegate determination module 520 can also access a list of contacts (e.g., contacts list, including identifications of contacts (e.g., phone number of device), stored on the mobile device 310 or on a remote server) or a communication history (e.g., a list of previous communications between the mobile device 310 and other devices that is stored on the mobile device 310 or on a remote server) to determine the relationship level. For example, the delegate determination module 520 can determine, based on accessing the list of contacts of the mobile device 310, that CCD-3 is listed as a contact of the mobile device 310, or, based on accessing the contact history of the mobile device 310, that one or more communications (e.g., phone calls, text messages) occurred between the mobile device 310 and CCD-3.

In some example embodiments, the delegate determination module 520 is configured to give preference to candidate computing devices with higher relationship levels. As shown in the example embodiment of FIG. 8, different scores or weights can be associated with the different relationship activity or levels (e.g., a score of 0.75 for devices that are determined to be pre-designated delegates of the mobile device 310, a score of 0.25 for devices that have had previous communication with the mobile device 310, etc.), and the candidate computing devices can then be ranked based on their corresponding scores or weights. For example, being listed as a delegate for the mobile device 310 can be assigned the highest value for a relationship level of a candidate computing device. The number and/or type of communications between the candidate computing device and the mobile device 310 can also be used to score the candidate computing device in terms of its relationship level with the mobile device 310. The candidate computing devices can then be ranked based on their corresponding scores or weights.

FIG. 9 illustrates a table 900 of corresponding relationship information for different users with respect to a user of a mobile device, in accordance with some example embodiments. This table 900, or the associations represented within it, can be generated and/or stored by the processing delegation system 150 for use in the previously-discussed evaluation of the different candidate computing devices for selection as delegate computing devices.

As seen in FIG. 9, relationship levels can be generated for the users of the candidate computing devices with respect to the user of the mobile device 310. For example, the delegate determination module 520 can determine that the user of CCD-1 is listed as a delegate for the user of the mobile device 310, such that this delegation applies to any computing device that the user of CCD-1 is currently using. The user of CCD-2 is not listed as a delegate for the user of the mobile device 310, but is listed as a contact of the user of the mobile device 310 (e.g., e-mail or home phone number of user of CCD-2 is stored as contact information on some device of the user of the mobile device 310) or there has been some communication activity between the user of CCD-2 and the user of the mobile device 310, regardless of the devices being used for that communication activity. The user of CCD-3 is not listed as a delegate or as a contact, but is identified as having a social media connection with the user of the mobile device 310 (e.g., the user of CCD-3 is a "friend" of the user of the mobile device 310 on Facebook). The user of CCD-4 has no relationship with the user of the mobile device 310. In some example embodiments, the delegate determination module 520 accesses one or more social media profiles (e.g., a Facebook profile) of the user of the mobile device 310 in determining any social media connections between the user of the mobile device 310 and a user of a candidate computing device.

In some example embodiments, the delegate determination module 520 is configured to give preference to candidate computing devices of users with higher relationship levels. As shown in the example embodiment of FIG. 9, different scores or weights can be associated with the different relationship activity or levels (e.g., a score of 1.00 for users that are determined to be pre-designated delegates of the user of mobile device 310, a score of 0.75 for users that are determined to be a listed contact of the user of the mobile device 310, a score of 0.50 for users that are determined to have a social media connection with the user of the mobile device 310, etc.), and the corresponding users of the corresponding candidate computing devices can then be ranked based on their corresponding scores or weights.

It is contemplated that more than one category of attributes or characteristics can be used by the delegate determination module 520 in selecting the delegate computing devices 320. For example, the delegate determination module 520 can determine and analyze all of the attributes discussed above with respect to the tables 700, 800, and 900 of FIGS. 7, 8, and 9, and generate scores or values for the candidate computing devices based on an aggregation of corresponding scores for the different categories of attributes or characteristics. In some example embodiments, different categories of attributes or characteristics can be weighted differently. In some example embodiments, the delegate determination module 520 is configured to enable the user of the mobile device 310 to set the scoring model for the different categories, controlling how different levels of attributes or characteristics are scored and weighted, such as via a graphical user interface presented to the user. In some example embodiments, the delegate determination module 520 determines the top N ranking candidate computing devices based on their scores, whether those scores are only for a single category of attributes or characteristics (e.g., only the activity level) or for an aggregation of multiple categories of attributes or characteristics (e.g., for the activity level and relationship level), where N is the number of delegate computing devices 320 that is being determined (e.g., if the delegate determination module 520 is attempting to select three delegate computing devices 320, then the delegate determination module 520 selects the three highest ranking candidate computing devices based on their scores).

In some example embodiments, the determination of the delegate computing devices 320 by the delegate determination module 520 is further based on the content requests or the corresponding content items. For example, the delegate determination module 320 can determine that one or more particular content requests or content items include sensitive information of the user of the mobile device 310, and therefore employ stricter criteria in selecting the delegate computing devices 320, prioritizing (e.g., weighting more heavily) candidate computing devices having a strong relationship with the mobile device 310 (e.g., candidate computing devices listed as a contact of the mobile device 310, having previous communication with the mobile device 310, or belonging to a user determined to have a social media connection with the user of the mobile device 310), as opposed to other categories of attributes or characteristics, such as activity level of resource availability of the candidate computing devices. The delegate determination module 520 can restrict the selection of delegate computing devices 320 to only those candidate computing devices having at least a specified minimum level of one or more specified attributes or characteristics, such as a minimum relationship level.

In some example embodiments, after receiving a content request from the mobile device 310, a delegate computing device 320 can determine whether to fulfill the content request (e.g., retrieve the requested content item, render the retrieved content item, and transmit the retrieved content item to the mobile device 310) or to deny the content request. This determination can be based on one or more of a variety of factors, including, but not limited to, how strong the relationship is between the mobile device 310 (or the user of the mobile device 310) and the delegate computing device 320 (or the user of the delegate computing device 320), an estimated level of resource consumption for fulfilling the content request (e.g., how negatively will fulfilling the content request affect the delegate computing device 320 in its ability to perform other functions), and a determined level of participation as a delegate computing device 320 by the mobile device 310 (e.g., how much does the mobile device 310 or the user of the mobile device 310 fulfill content requests for other devices).

The delegate computing device 320 can require that a predetermined criteria be satisfied in order to automatically fulfill a content request without the user of the delegate computing device 320 having to manually authorize the fulfillment of the content request. For example, the delegate computing device 320 can require that fulfillment of the content request be estimated to consume less than a predetermined amount of resources in order for the content request to be automatically fulfilled without prompting the user of the delegate computing device 320 for authorization. As another example, the delegate computing device 320 can require that the mobile device 310 (or the user of the mobile device 310) be listed as a contact of the delegate computing device 320 (or of the user of the delegate computing device 320) in order for the content request to be automatically fulfilled without prompting the user of the delegate computing device 320 for authorization. As yet another example, the delegate computing device 320 can require that the mobile device 310 (or the user of the mobile device 310) has fulfilled a minimum number of content requests for other devices, or specifically for the delegate computing device 320, in order for the content request to be automatically fulfilled without prompting the user of the delegate computing device 320 for authorization. In some example embodiments, the processing delegation system 150 can enable the user of the delegate computing device 320 to control and set the predetermined criteria via a graphical user interface.

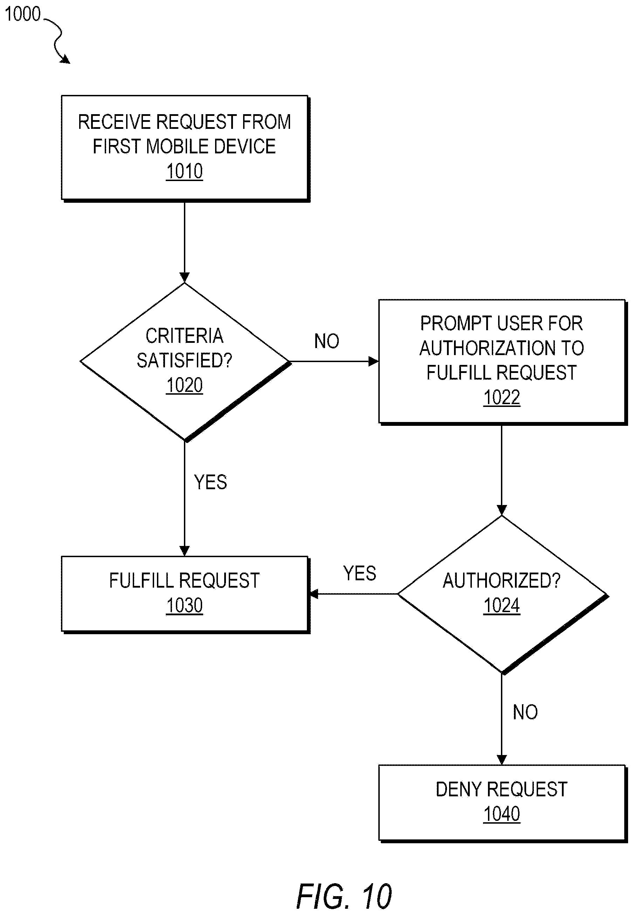

FIG. 10 is a flowchart illustrating a method 1000 of handling a request for delegation of content processing, in accordance with some example embodiments. The operations of method 1000 can be performed by a system or modules of a system. The operations of method 1000 can be performed by processing logic that can comprise hardware (e.g., circuitry, dedicated logic, programmable logic, microcode, etc.), software (e.g., instructions run on a processing device), or a combination thereof. In one example embodiment, the method 1000 is performed by a delegate computing device 320.

At operation 1010, the delegate computing device 320 receives a content request from the mobile device 310, as discussed above with respect to FIG. 3. At operation 1020, the delegate computing device 320 determines whether or not predetermined criteria for the content request, the mobile device 310, and/or the user of the mobile device 310 are satisfied, such as discussed above. If it is determined that the predetermined criteria is satisfied, then the delegate computing device 320 fulfills the content request at operation 1030. If it is determined that the predetermined criteria is not satisfied, then the delegate computing device 320 prompts the user of the delegate computing device 320 for authorization to fulfill the content request at operation 1022. At operation 1024, the delegate computing device 320 determines whether or not the user of the delegate computing device 320 authorized fulfillment of the content request. If it is determined that the user authorized the fulfillment of the content request, then the delegate computing device 320 fulfills the content request at operation 1030. If it is determined that the user has not authorized the fulfillment of the content request, then the delegate computing device 320 denies the request at operation 1040, such as by transmitting a notification to the processing delegation system 150 indicating that fulfillment of the content request has been denied by the delegate computing device 320.

In some example embodiments, the delegate determination module 520 is configured to select another candidate computing device to be a delegate computing device 320 as a replacement for the delegate computing device 320 that issued the denial of fulfillment of the content request, and then resubmit the content request to the replacement delegate computing device 320.

It is contemplated that the operations of method 1000 can incorporate any of the other features disclosed herein.

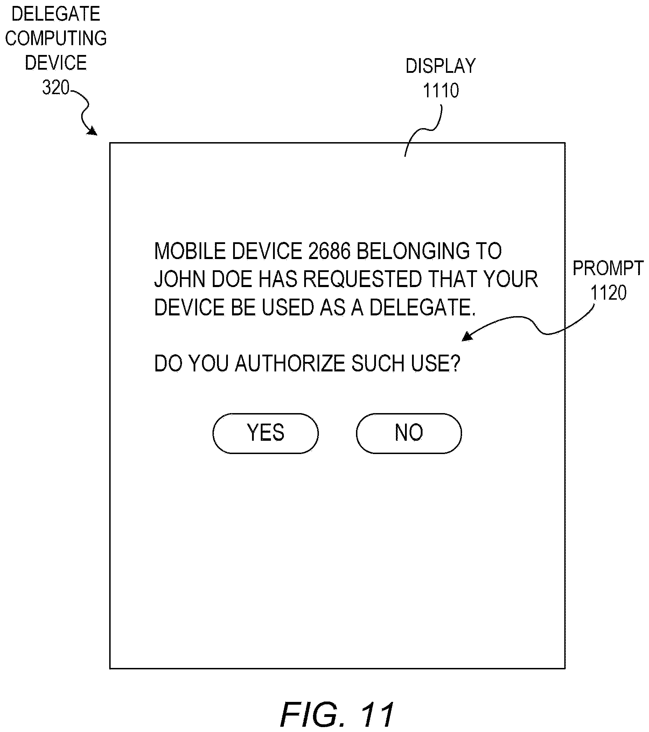

FIG. 11 illustrates a prompt 1120 to authorize or deny a delegation request being displayed on a display 1110 of a delegate computing device 320, in accordance with some example embodiments. As seen in FIG. 11, the prompt 1120 can comprise an indication that a particular mobile device (e.g., mobile device 2686 belonging to John Doe) is requesting that the delegate computing device 320 be used to fulfill a content request. The prompt 1120 can also comprise one or more selectable graphical user interface elements (e.g., selectable "Yes" and "No" buttons) that are configured to enable a user of the delegate computing device 320 to authorize or deny the fulfillment of the content request by the delegate computing device 320. It is contemplated that other configurations of the prompt 1120 are also within the scope of the present disclosure.

It is contemplated that any features of any embodiments disclosed herein can be combined with any other features of any other embodiments disclosed herein. Accordingly, any such hybrid embodiments are within the scope of the present disclosure.

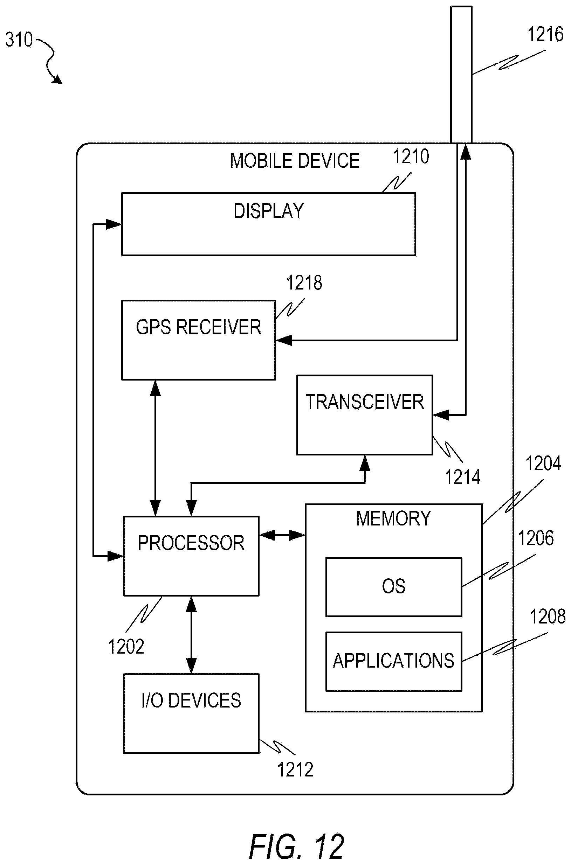

FIG. 12 is a block diagram illustrating mobile device 310, in accordance with some example embodiments. The mobile device 310 can include a processor 1202. The processor 1202 can be any of a variety of different types of commercially available processors suitable for mobile devices 310 (for example, an XScale architecture microprocessor, a Microprocessor without Interlocked Pipeline Stages (MIPS) architecture processor, or another type of processor). A memory 1204, such as a random access memory (RAM), a Flash memory, or other type of memory, is typically accessible to the processor 1202. The memory 1204 can be adapted to store an operating system (OS) 1206, as well as application programs 1208, such as a mobile location enabled application that can provide location-based services to a user. The processor 1202 can be coupled, either directly or via appropriate intermediary hardware, to a display 1210 and to one or more input/output (I/O) devices 1212, such as a keypad, a touch panel sensor, a microphone, and the like. Similarly, in some example embodiments, the processor 1202 can be coupled to a transceiver 1214 that interfaces with an antenna 1216. The transceiver 1214 can be configured to both transmit and receive cellular network signals, wireless data signals, or other types of signals via the antenna 1216, depending on the nature of the mobile device 310. Further, in some configurations, a GPS receiver 1218 can also make use of the antenna 1216 to receive GPS signals.

Certain embodiments are described herein as including logic or a number of components, modules, or mechanisms. Modules may constitute either software modules (e.g., code embodied on a machine-readable medium) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a Field-Programmable Gate Array (FPGA) or an Application Specific Integrated Circuit (ASIC). A hardware module may also include programmable logic or circuitry that is temporarily configured by software to perform certain operations. For example, a hardware module may include software executed by a general-purpose processor or other programmable processor. Once configured by such software, hardware modules become specific machines (or specific components of a machine) uniquely tailored to perform the configured functions and are no longer general-purpose processors. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software accordingly configures a particular processor or processors, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, with a particular processor or processors being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an Application Program Interface (API)).

The performance of certain of the operations may be distributed among the processors, not only residing within a single machine, but deployed across a number of machines. In some example embodiments, the processors or processor-implemented modules may be located in a single geographic location (e.g., within a home environment, an office environment, or a server farm). In other example embodiments, the processors or processor-implemented modules may be distributed across a number of geographic locations.

The systems, modules, methods, applications and so forth described in conjunction with FIGS. 1-11 are implemented in some embodiments in the context of a machine and an associated software architecture. The sections below describe representative software architecture(s) and machine (e.g., hardware) architecture that are suitable for use with the disclosed embodiments.

Software architectures are used in conjunction with hardware architectures to create devices and machines tailored to particular purposes. For example, a particular hardware architecture coupled with a particular software architecture will create a mobile device, such as a mobile phone, tablet device, or so forth. A slightly different hardware and software architecture may yield a smart device for use in the "internet of things." Yet another combination produces a server computer for use within a cloud computing architecture. Not all combinations of such software and hardware architectures are presented here as those of skill in the art can readily understand how to implement the features of the present disclosure in different contexts from the disclosure contained herein.

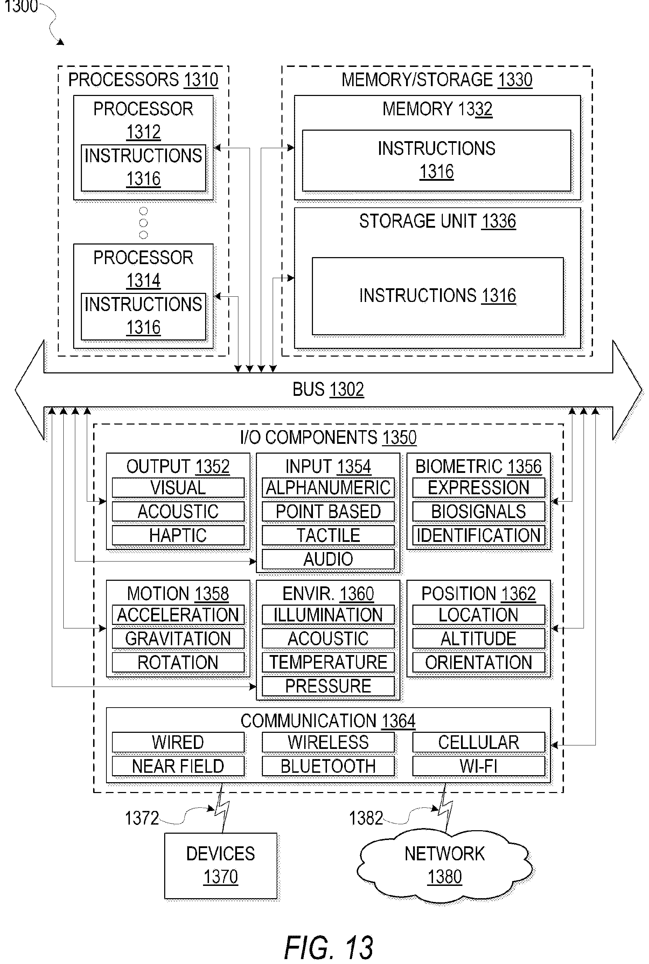

FIG. 13 is a block diagram illustrating components of a machine 1300, according to some example embodiments, able to read instructions from a machine-readable medium (e.g., a machine-readable storage medium) and perform any one or more of the methodologies discussed herein. Specifically, FIG. 13 shows a diagrammatic representation of the machine 1300 in the example form of a computer system, within which instructions 1316 (e.g., software, a program, an application, an applet, an app, or other executable code) for causing the machine 1300 to perform any one or more of the methodologies discussed herein may be executed. For example, the instructions 1316 may cause the machine 1300 to execute the operations discussed above with respect to FIGS. 3-11. Additionally, or alternatively, the instructions 1316 may implement the processing delegation system 150 of FIG. 5, and so forth. The instructions 1316 transform the general, non-programmed machine into a particular machine programmed to carry out the described and illustrated functions in the manner described. In alternative embodiments, the machine 1300 operates as a standalone device or may be coupled (e.g., networked) to other machines. In a networked deployment, the machine 1300 may operate in the capacity of a server machine or a client machine in a server-client network environment, or as a peer machine in a peer-to-peer (or distributed) network environment. The machine 1300 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 1316, sequentially or otherwise, that specify actions to be taken by machine 1300. Further, while only a single machine 1300 is illustrated, the term "machine" shall also be taken to include a collection of machines 1300 that individually or jointly execute the instructions 1316 to perform any one or more of the methodologies discussed herein.

The machine 1300 may include processors 1310, memory 1330, and I/O components 1350, which may be configured to communicate with each other such as via a bus 1302. In an example embodiment, the processors 1310 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an Application Specific Integrated Circuit (ASIC), a Radio-Frequency Integrated Circuit (RFIC), another processor, or any suitable combination thereof) may include, for example, processor 1312 and processor 1314 that may execute instructions 1316. The term "processor" is intended to include multi-core processor that may comprise two or more independent processors (sometimes referred to as "cores") that may execute instructions 1316 contemporaneously. Although FIG. 13 shows multiple processors 1310, the machine 1300 may include a single processor with a single core, a single processor with multiple cores (e.g., a multi-core process), multiple processors with a single core, multiple processors with multiples cores, or any combination thereof.

The memory/storage 1330 may include a memory 1332, such as a main memory, or other memory storage, and a storage unit 1336, both accessible to the processors 1310 such as via the bus 1302. The storage unit 1336 and memory 1332 store the instructions 1316 embodying any one or more of the methodologies or functions described herein. The instructions 1316 may also reside, completely or partially, within the memory 1332, within the storage unit 1336, within at least one of the processors 1310 (e.g., within the processor's cache memory), or any suitable combination thereof, during execution thereof by the machine 1300. Accordingly, the memory 1332, the storage unit 1336, and the memory of processors 1310 are examples of machine-readable media.

As used herein, "machine-readable medium" means a device able to store instructions and data temporarily or permanently and may include, but is not be limited to, random-access memory (RAM), read-only memory (ROM), buffer memory, flash memory, optical media, magnetic media, cache memory, other types of storage (e.g., Erasable Programmable Read-Only Memory (EEPROM)) and/or any suitable combination thereof. The term "machine-readable medium" should be taken to include a single medium or multiple media (e.g., a centralized or distributed database, or associated caches and servers) able to store instructions 1316. The term "machine-readable medium" shall also be taken to include any medium, or combination of multiple media, that is capable of storing instructions (e.g., instructions 1316) for execution by a machine (e.g., machine 1300), such that the instructions, when executed by one or more processors of the machine 1300 (e.g., processors 1310), cause the machine 1300 to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" excludes signals per se.

The I/O components 1350 may include a wide variety of components to receive input, provide output, produce output, transmit information, exchange information, capture measurements, and so on. The specific I/O components 1350 that are included in a particular machine will depend on the type of machine. For example, portable machines such as mobile phones will likely include a touch input device or other such input mechanisms, while a headless server machine will likely not include such a touch input device. It will be appreciated that the I/O components 1350 may include many other components that are not shown in FIG. 13. The I/O components 1350 are grouped according to functionality merely for simplifying the following discussion and the grouping is in no way limiting. In various example embodiments, the I/O components 1350 may include output components 1352 and input components 1354. The output components 1352 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1354 may include alphanumeric input components (e.g., a keyboard, a touch screen configured to receive alphanumeric input, a photo-optical keyboard, or other alphanumeric input components), point based input components (e.g., a mouse, a touchpad, a trackball, a joystick, a motion sensor, or other pointing instrument), tactile input components (e.g., a physical button, a touch screen that provides location and/or force of touches or touch gestures, or other tactile input components), audio input components (e.g., a microphone), and the like.

In further example embodiments, the I/O components 1350 may include biometric components 1356, motion components 1358, environmental components 1360, or position components 1362 among a wide array of other components. For example, the biometric components 1356 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram based identification), and the like. The motion components 1358 may include acceleration sensor components (e.g., accelerometer), gravitation sensor components, rotation sensor components (e.g., gyroscope), and so forth. The environmental components 1360 may include, for example, illumination sensor components (e.g., photometer), temperature sensor components (e.g., one or more thermometer that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 1362 may include location sensor components (e.g., a Global Position System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1350 may include communication components 1364 operable to couple the machine 1300 to a network 1380 or devices 1370 via coupling 1382 and coupling 1372 respectively. For example, the communication components 1364 may include a network interface component or other suitable device to interface with the network 1380. In further examples, communication components 1364 may include wired communication components, wireless communication components, cellular communication components, Near Field Communication (NFC) components, Bluetooth® components (e.g., Bluetooth® Low Energy), Wi-Fi® components, and other communication components to provide communication via other modalities. The devices 1370 may be another machine or any of a wide variety of peripheral devices (e.g., a peripheral device coupled via a Universal Serial Bus (USB)).

Moreover, the communication components 1364 may detect identifiers or include components operable to detect identifiers. For example, the communication components 1364 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1364, such as, location via Internet Protocol (IP) geo-location, location via Wi-Fi® signal triangulation, location via detecting a NFC beacon signal that may indicate a particular location, and so forth.

In various example embodiments, one or more portions of the network 1380 may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi® network, another type of network, or a combination of two or more such networks. For example, the network 1380 or a portion of the network 1380 may include a wireless or cellular network and the coupling 1382 may be a Code Division Multiple Access (CDMA) connection, a Global System for Mobile communications (GSM) connection, or other type of cellular or wireless coupling. In this example, the coupling 1382 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard setting organizations, other long range protocols, or other data transfer technology.

The instructions 1316 may be transmitted or received over the network 1380 using a transmission medium via a network interface device (e.g., a network interface component included in the communication components 1364) and utilizing any one of a number of well-known transfer protocols (e.g., hypertext transfer protocol (HTTP)). Similarly, the instructions 1316 may be transmitted or received using a transmission medium via the coupling 1372 (e.g., a peer-to-peer coupling) to devices 1370. The term "transmission medium" shall be taken to include any intangible medium that is capable of storing, encoding, or carrying instructions 1316 for execution by the machine 1300, and includes digital or analog communications signals or other intangible medium to facilitate communication of such software.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Although an overview of the present subject matter has been described with reference to specific example embodiments, various modifications and changes may be made to these embodiments without departing from the broader scope of embodiments of the present disclosure.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. The specification and drawings are, accordingly, to be regarded in an illustrative rather than a restrictive sense.

Although an embodiment has been described with reference to specific example embodiments, it will be evident that various modifications and changes can be made to these embodiments without departing from the broader scope of the present disclosure. Accordingly, the specification and drawings are to be regarded in an illustrative rather than a restrictive sense. The accompanying drawings that form a part hereof show, by way of illustration, and not of limitation, specific embodiments in which the subject matter can be practiced. The embodiments illustrated are described in sufficient detail to enable those skilled in the art to practice the teachings disclosed herein. Other embodiments can be utilized and derived therefrom, such that structural and logical substitutions and changes can be made without departing from the scope of this disclosure. This Detailed Description, therefore, is not to be taken in a limiting sense, and the scope of various embodiments is defined only by the appended claims.

Although specific embodiments have been illustrated and described herein, it should be appreciated that any arrangement calculated to achieve the same purpose can be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

The aforementioned embodiments of the disclosure are meant to be examples useful for understanding the invention, which is only defined by the appended claims.

## Claims

1. A method (600) for delegating content processing, the method being implemented by a mobile device (110, 310) and comprising:
determining (610) a plurality of content requests for an online page, each one of the content requests corresponding to a different content item of the online page;
detecting (620) a plurality of delegate computing devices (320-1..320-N) to which to delegate the content requests, the plurality of delegate computing devices (320-1..320-N) comprising a plurality of mobile devices;
transmitting (630) a corresponding one of the content requests to each one of the delegate computing devices (320-1..320-N), each corresponding one of the content requests being configured to trigger the corresponding delegate computing device (320-1..320-N) to retrieve the corresponding content item of the corresponding one of the content requests from a server (330) hosting the online page, render the corresponding content item, and transmit the rendered content item to the mobile device (110, 310);
receiving (640) the corresponding rendered content item from each one of the delegate computing device (320-1..320-N); and
displaying (650) the online page, the display of the online page comprising the corresponding rendered content items from the delegate computing devices (320-1..320-N).

2. The method of claim 1, wherein the detecting (620) of the plurality of delegate computing devices (320-1..320-N) comprises detecting candidate computing devices using wireless communication.

3. The method of claim 2, wherein the detecting (620) of the plurality of delegate computing devices (320-1..320-N) further comprises, for each one of the candidate computing devices (320-1 ..320-N), assigning the candidate computing device as one of the delegate computing devices (320-1..320-N) for the corresponding content request based on a corresponding current level of activity of the corresponding candidate computing device or on a corresponding availability of resources of the corresponding candidate computing device.

4. The method of claim 2, wherein the detecting (620) of the plurality of delegate computing devices (320-1..320-N) further comprises, for each one of the candidate computing devices (320-1 ..320-N), assigning the candidate computing device as one of the delegate computing devices (320-1..320-N) for the corresponding content request based on a determined relationship between the first mobile device and the candidate computing device.

5. The method of claim 2, wherein the detecting (620) of the plurality of delegate computing devices (320-1..320-N) further comprises, for each one of the candidate computing devices (320-1 ..320-N), assigning the candidate computing device as one of the delegate computing devices (320-1..320-N) for the corresponding content request based on a determined relationship between a user of the first mobile device and a user of the candidate computing device.

6. The method of claim 1, wherein the displaying (650) of the online page comprises:
determining a corresponding section of the online page for each one of the received rendered content items; and
inserting each one of the received rendered content items into the corresponding section of the online page.

7. The method of claim 1, wherein each one of the content items comprises one of image content, multimedia content, applet content, and frames content; or wherein the first mobile device comprises a smartphone, a tablet computer, a wearable device, or a laptop computer.

8. The method of claim 1, wherein the determining of the plurality of content requests comprises:
transmitting a Hypertext Transfer Protocol, HTTP, request for the online page to the server hosting the online page;
receiving an HTTP response from the server subsequent to the transmitting of the HTTP request, the HTTP response corresponding to the HTTP request; and
parsing the HTTP request, the determining of the plurality of content requests being based on the parsing of the HTTP request.

9. A machine-readable storage medium carrying a set of instructions that, when executed by at least one processor, causes the at least one processor to carry out the method of any one of claims 1 to 8.

10. A mobile device (110, 310) comprising:
at least one processor; and
a computer-readable medium storing executable instructions that, when executed, cause the at least one processor to carry out the method of any one of claims 1 to 8.

## Patentansprüche

1. Verfahren (600) zum Delegieren von Inhaltsverarbeitung, wobei das Verfahren durch eine mobile Vorrichtung (110, 310) implementiert wird und umfasst:
Bestimmen (610) einer Vielzahl von Inhaltsabfragen für eine Onlineseite, wobei jede der Inhaltsabfragen einem unterschiedlichen Inhaltselement der Onlineseite entspricht;
Erkennen (620) einer Vielzahl von delegierten Rechnervorrichtungen (320-1...320-N) an die die Inhaltsabfragen delegiert werden, wobei die Vielzahl von delegierten Rechnervorrichtungen (320-1...320-N) eine Vielzahl von mobilen Vorrichtungen umfasst;
Übertragen (630) einer entsprechenden Inhaltsabfrage der Inhaltsabfragen an jede der delegierten Rechnervorrichtungen (320-1...320-N), wobei jede entsprechende Inhaltsabfrage der Inhaltsabfragen ausgelegt ist, um auszulösen, dass die entsprechende delegierte Rechnervorrichtung (320-1...320-N) das entsprechende Inhaltselement der Inhaltsabfragen von einem Server (330) abruft, auf dem die Onlineseite gehostet ist, das entsprechende Inhaltselement rendert und das gerenderte Inhaltselement an die mobile Vorrichtung (110, 310) überträgt;
Empfangen (640) des entsprechenden gerenderten Inhaltselemente von jeder delegierten Rechnervorrichtung (320-1...320-N); und
Anzeigen (650) der Onlineseite, wobei die Anzeige der Onlineseite die entsprechenden gerenderten Inhaltselemente von den delegierten Rechnervorrichtungen (320-1...320-N) umfasst.

2. Verfahren nach Anspruch 1, wobei das Erkennen (620) der Vielzahl von delegierten Rechnervorrichtungen (320-1...320-N) Erkennen von Rechnervorrichtungskandidaten unter Verwendung von drahtloser Kommunikation umfasst.

3. Verfahren nach Anspruch 2, wobei das Erkennen (620) der Vielzahl von delegierten Rechnervorrichtungen (320-1...320-N) weiter umfasst, für jeden der Rechnervorrichtungskandidaten (320-1...320-N) Zuordnen des Rechnervorrichtungskandidaten als eine der delegierten Rechnervorrichtungen (320-1...320-N) für die entsprechende Inhaltsabfrage auf der Grundlage eines entsprechenden aktuellen Aktivitätspegels des entsprechenden Rechnervorrichtungskandidaten oder einer entsprechenden Verfügbarkeit des entsprechenden Rechnervorrichtungskandidaten.

4. Verfahren nach Anspruch 2, wobei das Erkennen (620) der Vielzahl von delegierten Rechnervorrichtungen (320-1...320-N) weiter umfasst, für jeden der Rechnervorrichtungskandidaten (320-1...320-N), Zuordnen des Rechnervorrichtungskandidaten als eine der delegierten Rechnervorrichtungen (320-1...320-N) für die entsprechende Inhaltsabfrage auf der Grundlage einer bestimmten Beziehung zwischen der ersten mobilen Vorrichtung und dem Rechnervorrichtungskandidaten.

5. Verfahren nach Anspruch 2, wobei das Erkennen (620) der Vielzahl von delegierten Rechnervorrichtungen (320-1...320-N) weiter umfasst, für jeden der Rechnervorrichtungskandidaten (320-1...320-N), Zuordnen des Rechnervorrichtungskandidaten als eine der delegierten Rechnervorrichtungen (320-1...320-N) für die entsprechende Inhaltsabfrage auf der Grundlage einer bestimmten Beziehung zwischen einem Benutzer der ersten mobilen Vorrichtung und einem Benutzer des Rechnervorrichtungskandidaten.

6. Verfahren nach Anspruch 1, wobei das Anzeigen (650) der Onlineseite umfasst:
Bestimmen eines entsprechenden Abschnitts der Onlineseite für jedes Inhaltselement der empfangenen gerenderten Inhaltselemente; und
Einsetzen von jedem der empfangenen gerenderten Inhaltselemente in den entsprechenden Abschnitt der Onlineseite.

7. Verfahren nach Anspruch 1, wobei jedes der Inhaltselemente eines von Bildinhalt, Multimediainhalt, Applet-Inhalt und Frames-Inhalt umfass; oder wobei die erste mobile Vorrichtung ein Smartphon, einen Tabletcomputer, eine tragbare Vorrichtung oder einen Laptopcomputer umfasst.

8. Verfahren nach Anspruch 1, wobei das Bestimmen der Vielzahl von Inhaltsabfragen umfasst:
Übertragen einer Abfrage im Hypertextübertragungsprotokoll, HTTP, für die Onlineseite an den Server, auf dem die Onlineseite gehostet ist;
Empfangen einer http-Antwort von dem Server nachfolgend auf das Übertragen der http-Abfrage, wobei die http-Antwort der http-Abfrage entspricht; und
Parsen der http-Abfrage, wobei das Bestimmen der Vielzahl von Inhaltsabfragen auf der Grundlage des Parsens der http-Abfrage erfolgt.

9. Maschinenlesbares Speichermedium, das einen Satz Anweisungen trägt, die, wenn sie von mindestens einem Prozessor ausgeführt werden, verursachen, dass der mindestens eine Prozessor das Verfahren nach einem der Ansprüche 1 bis 8 durchführt.

10. Mobile Vorrichtung (110, 310), umfassend:
mindestens einen Prozessor; und
ein maschinenlesbares Speichermedium, auf dem Anweisungen gespeichert sind, die, wenn sie ausgeführt werden, verursachen, dass der mindestens eine Prozessor das Verfahren nach einem der Ansprüche 1 bis 8 durchführt.

## Revendications

1. Procédé (600) de délégation de traitement de contenu, le procédé étant mis en œuvre par un dispositif mobile (110, 310) et comprenant :
la détermination (610) d'une pluralité de demandes de contenu pour une page en ligne, chacune des demandes de contenu correspondant à un élément de contenu différent de la page en ligne ;
la détection (620) d'une pluralité de dispositifs informatiques délégués (320-1, ..., 320-N) auxquels déléguer les demandes de contenu, la pluralité de dispositifs informatiques délégués (320-1, ..., 320-N) comprenant une pluralité de dispositifs mobiles ;
la transmission (630) d'une demande correspondante des demandes de contenu à chacun des dispositifs informatiques délégués (320-1, ..., 320-N), chaque demande correspondante des demandes de contenu étant configurée pour déclencher le dispositif informatique délégué correspondant (320-1, ..., 320-N) pour récupérer l'élément de contenu correspondant de la demande correspondante des demandes de contenu à partir d'un serveur (330) hébergeant la page en ligne, rendre l'élément de contenu correspondant et transmettre l'élément de contenu rendu au dispositif mobile (110, 310) ;
la réception (640) de l'élément de contenu rendu correspondant à partir de chacun des dispositifs informatiques délégués (320-1, ..., 320-N) ; et
l'affichage (650) de la page en ligne, l'affichage de la page en ligne comprenant les éléments de contenu rendus correspondants provenant des dispositifs informatiques délégués (320-1, ..., 320-N).

2. Procédé selon la revendication 1, dans lequel la détection (620) de la pluralité de dispositifs informatiques délégués (320-1, ..., 320-N) comprend la détection de dispositifs informatiques candidats en utilisant une communication sans fil.

3. Procédé selon la revendication 2, dans lequel la détection (620) de la pluralité de dispositifs informatiques délégués (320-1, ..., 320-N) comprend en outre, pour chacun des dispositifs informatiques candidats (320-1, ..., 320-N), l'attribution du dispositif informatique candidat comme un des dispositifs informatiques délégués (320-1, ..., 320-N) pour la demande de contenu correspondante sur la base d'un niveau actuel correspondant d'activité du dispositif informatique candidat correspondant ou d'une disponibilité correspondante de ressources du dispositif informatique candidat correspondant.

4. Procédé selon la revendication 2, dans lequel la détection (620) de la pluralité de dispositifs informatiques délégués (320-1, ..., 320-N) comprend en outre, pour chacun des dispositifs informatiques candidats (320-1, ..., 320-N), l'attribution du dispositif informatique candidat comme un des dispositifs informatiques délégués (320-1, ..., 320-N) pour la demande de contenu correspondante sur la base d'une relation déterminée entre le premier dispositif mobile et le dispositif informatique candidat.

5. Procédé selon la revendication 2, dans lequel la détection (620) de la pluralité de dispositifs informatiques délégués (320-1, ..., 320-N) comprend en outre, pour chacun des dispositifs informatiques candidats (320-1, ..., 320-N), l'attribution du dispositif informatique candidat comme un des dispositifs informatiques délégués (320-1, ..., 320-N) pour la demande de contenu correspondante sur la base d'une relation déterminée entre un utilisateur du premier dispositif mobile et un utilisateur du dispositif informatique candidat.

6. Procédé selon la revendication 1, dans lequel l'affichage (650) de la page en ligne comprend :
la détermination d'une section correspondante de la page en ligne pour chacun des éléments de contenu rendus reçus ; et
l'insertion de chacun des éléments de contenu rendus reçus dans la section correspondante de la page en ligne.

7. Procédé selon la revendication 1, dans lequel chacun des éléments de contenu comprend un parmi un contenu d'image, un contenu multimédia, un contenu d'appliquette et un contenu de trames ; ou dans lequel le premier dispositif mobile comprend un téléphone intelligent, un ordinateur tablette, un dispositif à porter ou un ordinateur portable.

8. Procédé selon la revendication 1, dans lequel la détermination de la pluralité de demandes de contenu comprend :
la transmission d'une demande de protocole de transfert hypertexte, HTTP, pour la page en ligne au serveur hébergeant la page en ligne ;
la réception d'une réponse HTTP à partir du serveur subséquemment à la transmission de la demande HTTP, la réponse HTTP correspondant à la demande HTTP ; et
l'analyse syntaxique de la demande HTTP, la détermination de la pluralité de demandes de contenu étant basée sur l'analyse syntaxique de la demande HTTP.

9. Support de stockage lisible par machine portant un jeu d'instructions qui, quand il est exécuté par au moins un processeur, amène l'au moins un processeur à réaliser le procédé selon l'une quelconque des revendications 1 à 8.

10. Dispositif mobile (110, 310) comprenant :
au moins un processeur ; et
un support lisible par ordinateur stockant des instructions exécutables qui, quand elles sont exécutées, amènent l'au moins un processeur à réaliser le procédé selon l'une quelconque des revendications 1 à 8.
